# EUROPÄISCHE PATENTSCHRIFT

(11) **EP 2 942 521 B1**
(45) Veröffentlichungstag und Bekanntmachung des Hinweises auf die Patenterteilung: **29.03.2017**
(21) Anmeldenummer: 15166647.6
(22) Anmeldetag: 06.05.2015
(51) Int. Cl.: F03D 1/00, F03D 1/06

(54) **REPARATURVERFAHREN FÜR VORTEXGENERATOR UND EIN BAUSATZ DAFÜR**
REPAIR METHOD FOR VORTEX GENERATOR AND A KIT FOR IT
PROCÉDÉ DE RÉPARATION POUR GÉNÉRATEUR DE VORTEX ET KIT ASSOCIÉ

(30) Priorität: 09.05.2014 DE 102014106529
(43) Veröffentlichungstag der Anmeldung: 11.11.2015
(73) Patentinhaber: Senvion GmbH, 22297 Hamburg (DE)
(72) Erfinder: FLACH, Christian, 24790 Schacht Audorf (DE)
(74) Vertreter: Groth, Wieland

(56) Entgegenhaltungen:
- EP-A1- 2 444 658
- EP-A1- 2 597 300
- WO-A1-2013/060493

## Beschreibung

Die Erfindung betrifft ein Verfahren zur Reparatur eines aus einer Rotorblattaußenhaut eines Rotorblattes abstehenden Vortexgenerators, dessen Vortexgeneratorspitze abgebrochen ist und einen Vortexgeneratorstumpf auf der Rotorblattaußenhaut hinterlässt, sowie einen Reparaturbausatz mit einer Vortexgeneratorkrone und einer Schablone.

Rotorblätter mit Vortexgeneratoren sind im Stand der Technik natürlich hinlänglich bekannt.

Es ist bei Windenergieanlagen bekannt, zur Erhöhung des Auftriebs das Rotorblatt mit Vortexgeneratoren zu versehen. Dabei handelt es sich in der Regel um im Querschnitt dreieckförmige Flügel, die von einer Saugseite der Rotorblattaußenhaut im Wesentlichen senkrecht abstehen. Das Dreieck ist zur Rotorblatthinterkante hin rechtwinklig mit einer senkrecht abfallenden Dreieckseite und zur Rotorblattnase hin spitzwinkelig ausgebildet. Die Vortexgeneratoren können schräg oder exakt parallel zur Lufstromrichtung auf der Rotorblattaußenhaut angeordnet sein. Bei Umströmung des Rotorblattes erzeugt jeder Vortexgenerator stromabwärts einen Wirbel, der sich stromabwärts von der senkrechten Kante des Vortexgenerators löst. Diese Wirbel oder Vortices verhindern das Ausbilden einer zu starken und zu dicken turbulenten Grenzschicht zwischen der Außenhaut des Rotorblattes und der das Rotorblatt umströmenden laminaren Luftströmung. Dadurch wird einem Abreißen oder Ablösen der laminaren Strömung vom Rotorblatt entgegengewirkt, und es können höhere und stärkere Auftriebskräfte am Rotorblatt wirken und sich ausbilden.

Problematisch bei den bekannten Vortexgeneratoren ist, dass die Vortexgeneratoren abbrechen können. Die Gefahr des Abbrechens entsteht beispielsweise wenn Kletterer die Rotorblätter von außen warten und sich am Vortexgenerator abstützen. Es können aber auch Hagelschäden am Vortexgenerator auftreten. Die Gefahr des Abbrechens des Vortexgenerators wird erhöht, weil eine Versprödung durch UV-Einstrahlung im Laufe der Zeit einsetzt. Auch Eisbildung und Vogelschlag können zu einer Beschädigung oder einem Abbrechen der Vortexgeneratorspitze führen.

Vortexgeneratoren sind häufig in eine Grundplatte integriert. Bei der Anordnung aus Vortexgenerator und Grundplatte handelt es sich um ein integrales Bauteil, das beispielsweise in einem Spritzgussverfahren aus einem Kunststoff hergestellt ist. Nach dem Stand der Technik wird nach einem Abbruch des Vortexgenerators von der Grundplatte die Grundplatte vollständig ersetzt, d. h. es muss dazu in der Regel die gesamte Grundplatte aus der Rotorblattaußenhaut entfernt werden und durch eine neue Grundplatte mit Vortexgenerator ersetzt werden. Die Grundplatte ist in der Regel in eine Aussparung in der Rotorblattaußenhaut eingelassen. Dort muss sie eingeklebt werden, und abstehende Kanten und Sprünge müssen nachträglich im Laminierverfahren oder durch Schleifarbeiten geglättet werden. Diese Reparaturverfahren sind ausgesprochen zeitaufwendig und umständlich.

Aus der EP 2 466 122 A2 ist ein Windturbinenblatt mit einer Vielzahl an Vortexgeneratoren bekannt, die integral auf der Außenhaut des Rotorblattes angeformt sind.

In der EP 2 597 300 A1 ist ein Windturbinenblatt offenbart mit einer auf einem Streifen angeordneten Vielzahl an Vortexgeneratoren.

In der EP 2 201 243 B1 ist ein Windturbinenblatt offenbart mit einer Mehrzahl an Vortexgeneratoren, die in einem Übergangsbereich oder einem Tragflächenbereich, der dem Übergangsbereich am nächsten liegt, angeordnet sind.

Aufgabe der Erfindung ist es daher, ein eingangs genanntes Verfahren zur Verfügung zu stellen, das ein kostengünstiges und schnelleres Reparieren abgebrochener Vortexgeneratoren ermöglicht, sowie einen Reparaturbausatz zur Verfügung zu stellen, der eine schnelle und kostengünstige Reparatur ermöglicht.

Die Aufgabe wird in ihrem ersten Aspekt durch ein Verfahren mit den Merkmalen des Anspruchs 1 gelöst.

Es ist erfindungsgemäß vorgesehen, einen Vortexgeneratorstumpf, der sich durch Abbrechen einer Vortexgeneratorspitze eines Vortexgenerators ausgebildet hat, abzuschleifen. In einem weiteren Schritt wird erfindungsgemäß auf den abgeschliffenen Vortexgeneratorstumpf eine Vortexgeneratorkrone aufgebracht. Die Vortexgeneratorkrone wird vorzugsweise mit einem oder mehreren Klebstoffen aufgeklebt.

Die Erfindung macht von der Erkenntnis Gebrauch, dass Ermüdungsbrüche bei integral mit einer Grundplatte verbundenen Vortexgeneratoren nicht am Fuß des Vortexgenerators, also dem Übergang zwischen Vortexgenerator und Grundplatte, sondern ein Stück weit beabstandet von der Grundplatte auftreten. Es bricht gleichsam nur die Vortexgeneratorspitze des Vortexgenerators ab, und es bleibt ein Vortexgeneratorstumpf über.

Der Vortexgeneratorstumpf ist aber nachteiligerweise in seiner äußeren Form selbst bei identisch ausgeformten Vortexgeneratoren desselben Vortexgeneratortyps natürlich unterschiedlich. Das heißt, die Abbruchkanten unterscheiden sich bei jedem abgebrochenen Vortexgenerator voneinander. Es ist daher nicht ohne weiteres möglich, eine Vortexgeneratorkrone mit vorhersagbarer Festigkeit und Klebemitteleinsatz auf einen Vortexgeneratorstumpf aufzusetzen.

Erfindungsgemäß wird der Vortexgeneratorstumpf vor dem Aufsetzen der Vortexgeneratorkrone abgeschliffen. Vorzugsweise wird der Vortexgeneratorstumpf auf einen Vortexgeneratorstumpf standardisierter Größe, insbesondere standardisierter Höhe über der Rotorblattaußenhaut abgeschliffen.

In einer besonders bevorzugten Ausführungsform des erfindungsgemäßen Verfahrens wird auf den Vortexgeneratorstumpf eine Schablone aufgesteckt, und über die Schablone hinaus abstehende Teile des Vortexgeneratorstumpfes werden abgeschliffen. Dadurch ist es erfindungsgemäß möglich, trotz der unterschiedlichen Ausbildung der Abbruchkanten in verschiedenen Schadensfällen einen standardisierten abgeschliffenen Vortexgeneratorstumpf zur Verfügung zu stellen.

Auf den Vortexgeneratorstumpf wird daher vorzugsweise eine standardisierte Schablone aufgesetzt. Standardisiert meint hier, dass eine standardisierte Schablone für jeden Vortexgeneratortyp zur Verfügung gestellt wird. Die Schablonen verschiedener Vortexgeneratortypen können sich voneinander unterscheiden. Vortexgeneratoren eines Typs weisen dieselben Außenabmessungen auf, d. h. sie weisen eine gleiche Bauhöhe, - breite und -länge auf sowie eine gleiche Außenform.

Die dem Vortexgenerator über den Bautyp zugeordnete Schablone wird auf den abgebrochenen Vortexgenerator aufgesetzt, und die Abbruchkante wird auf die Höhe der Schablone abgeschliffen, so dass ein in der Höhe und in Breite und Länge standardisierter abgeschliffener Vortexgeneratorstumpf entsteht. Auf diesen kann eine ebenfalls standardisierte Vortexgeneratorkrone mit einer vorgegebenen standardisierten Menge an Klebstoff optimal aufgesetzt und aufgeklebt werden.

Vorzugsweise ist eine Aufnahme der Vortexgeneratorkrone der Größe des abgeschliffenen Vortexgeneratorstumpfes angepasst. Die Aufnahme weist geringfügig größere Innenabmessungen als die Außenabmessungen des abgeschliffenen Vortexgeneratorstumpfes auf, so dass ein dünner Spalt zwischen Aufnahme und Außenhaut des Vortexgeneratorstumpfes ausgebildet wird, der mit Klebstoff, vorzugsweise Flüssigklebstoff, gefüllt wird und eine optimale und feste Klebverbindung herstellt. Die Spaltbreite beträgt günstigerweise 0,5 mm oder 1 mm; es sind aber auch andere Spaltbreiten denkbar.

Günstigerweise weist die Vortexgeneratorkrone an ihrem rotorblattseitigen, d. h. der Vortexgeneratorspitze abgewandten, offenen umlaufenden Aufnahmerand einen Klebstreifen auf, dessen Schutzschicht direkt vor dem Aufkleben der Vortexgeneratorkrone abgezogen wird und die Klebschicht freigibt, und so kann die Vortexgeneratorkrone auf die Rotorblattaußenhaut aufgeklebt werden.

Vorab wird in die Aufnahme der Vortexgeneratorkrone eine vorbestimmte standardisierte Menge an Klebstoff, vorzugsweise flüssigem Klebstoff, eingefüllt, der sich durch Andrücken der Vortexgeneratorkrone auf den abgeschliffenen Vortexgeneratorstumpf gleichförmig im Spalt zwischen Innenwandung der Aufnahme und Außenwandung des Vortexgeneratorstumpfes verteilt. In der Aufnahme enthaltene Luft sowie geringe überschüssige Klebstoffmengen können durch eine Austrittsöffnung, die die Vortexgeneratorkrone vollständig durchdringt und eine Verbindung zwischen Außenwandung der Vortexgeneratorkrone und Aufnahme herstellt, austreten.

Die Aufgabe wird in ihrem zweiten Aspekt durch einen Reparaturbausatz mit den Merkmalen des Anspruchs 7 erfüllt.

Der Reparaturbausatz eignet sich insbesondere für einen Einsatz bei einem der oben genannten erfindungsgemäßen Verfahren.

Erfindungsgemäß weist der Reparaturbausatz eine Vortexgeneratorkrone und eine Schablone auf. Die Vortexgeneratorkrone weist eine Aufnahme und eine einer abgebrochenen Vortexgeneratorspitze angepasste Außenkontur auf. Die Aufnahme ist einem abgeschliffenen Vortexgeneratorstumpf angepasst.

Die Schablone ist zum Aufsetzen auf den abgebrochenen Vortexgeneratorstumpf bestimmt. Sie weist einen einem Vortexgeneratorstumpf komplementär angepassten Innenraum auf mit einer großen rotorblattseitigen Öffnung und einer kleinen rotorblattabseitigen Öffnung. Die Schablone ist in dem Sinne komplementär angepasst, als dass sie vorzugsweise formschlüssig auf den Vortexgeneratorstumpf ziehbar ist.

Erfindungsgemäß sind Vortexgeneratorkrone und Schablone zum einen aufeinander abgestimmt, und beide sind zum anderen einem bestimmten Typ von Vortexgenerator angepasst, wobei der Typ des Vortexgenerators durch seine Außenabmessungen definiert ist.

Die Anwendung des Reparaturbausatzes ergibt sich aus den oben beschriebenen Verfahrensschritten. Vorzugsweise weist die Vortexgeneratorkrone einen Auslass für flüssigen Klebstoff und vorzugsweise auch Luft zwischen Aufnahme und Außenhaut der Vortexgeneratorkrone auf. Der Auslass ist vorzugsweise eine Bohrung, vorzugsweise eine im Querschnitt kreisförmige Bohrung zwischen der Außenhaut der Vortexgeneratorkrone und der Aufnahme, die den Durchlass von Luft und auch flüssigem Klebstoff ermöglicht, damit die Vortexgeneratorkrone formschlüssig auf den abgeschliffenen Vortexgeneratorstumpf aufgesetzt werden kann.
In einer weiter bevorzugten Ausführungsform des erfindungsgemäßen Reparaturbausatzes weist die Vortexgeneratorkrone ein Klebeband auf, das den Rand der Aufnahmeöffnung der Vortexgeneratorkrone vorzugsweise vollständig umläuft.

Die Erfindung wird anhand von zehn Figuren beispielhaft beschrieben. Dabei zeigen:
- Fig. 1: eine perspektivische Ansicht eines Abschnitts eines herkömmlichen Rotorblattes mit vier Vortexgeneratoren,
- Fig. 2: zwei auf einer Grundplatte angeordnete Vortexgeneratoren zum Einbau in ein Rotorblatt gem. Fig. 1,
- Fig. 3a: ein typisches Schadensbild eines Vortexgenerators in Fig. 1 und 2 in einer seitlichen Ansicht,
- Fig. 3b: eine Schnittansicht entlang der Linie A-A in Fig. 3a,
- Fig. 4a: eine erfindungsgemäße Schablone und Vortexgeneratorstumpf gemäß Fign. 3a und 3b,
- Fig. 4b: eine auf den Vortexgeneratorstumpf aufgesetzte Schablone,
- Fig. 4c: einen abgeschliffenen Vortexgeneratorstumpf bei abgenommener Schablone,
- Fig. 4d: eine auf den abgeschliffenen Vortexgeneratorstumpf gemäß Fig. 4c aufgesetzte Vortexgeneratorkrone,
- Fig. 5a: eine Schnittansicht entlang der Linie V-V in Fig. 4d,
- Fig. 5b: eine Schnittansicht der Vortexgeneratorkrone gemäß Fig. 5a.

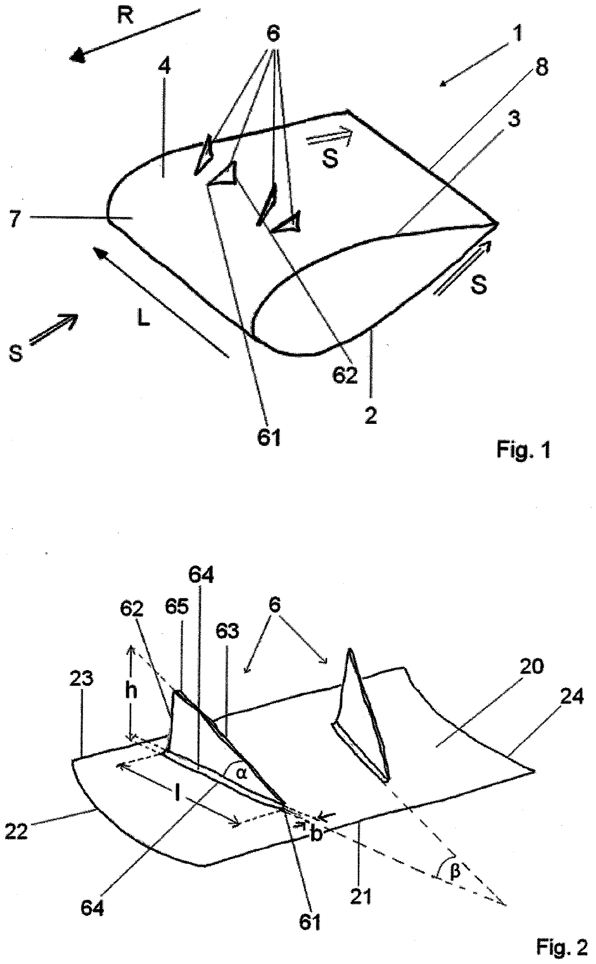

In Fig. 1 ist ein Rotorblattabschnitt 1 perspektivisch und schematisch dargestellt. Er weist eine Druckseite 2 und eine Saugseite 3 auf. Ein Querschnitt des Rotorblattabschnitts 1 bildet entlang seiner gesamten Ausdehnung in einer Längsrichtung L ein aerodynamisches Profil aus.

Auf der Saugseite 3 des Rotorblattabschnitts 1 sind auf einer Rotorblattaußenhaut 4 vier Vortexgeneratoren 6 angeordnet. Im Betrieb werden der Rotorblattabschnitt 1 und das gesamte Rotorblatt an einer in einer Rotationsrichtung R des Rotors vorlaufenden Rotorblattnase 7 angeströmt. Die Anströmrichtung eines Luftstromes S ist mittels eines Luftrichtungspfeiles dargestellt. Der Rotorblattabschnitt 1 wird an der Druck- und Saugseite 2, 3 gleichzeitig umströmt und erzeugt aufgrund seines aerodynamischen Profils eine resultierende Kraft in Richtung der Saugseite 3, die den Rotor in Rotationsbewegung versetzt.

Die Vortexgeneratoren 6 auf der Saugseite 3 des Rotorblattabschnitts 1 sind in einer seitlichen Ansicht, ausgehend von der in Längsrichtung L innen am Rotorblatt angeordneten Rotorblattnabe oder außen angeordneten Rotorblattspitze im Wesentlichen dreieckförmig ausgebildet, wobei das Dreieck zur Rotorblattnase 7 hin eine zulaufende Spitze 61 aufweist und zu einer Rotorblatthinterkante 8 hin eine senkrecht auf die Rotorblattaußenhaut 4 abfallende Hinterkante 62 ausbildet.

Beim Umströmen des Rotorblattabschnitts 1 durch den Luftstrom S bildet sich hinter jedem der Vortexgeneratoren 6 jeweils ein Luftwirbel aus, der auch Vortex genannt wird. Die Vortexgeneratoren 6 sind zur Richtung des Luftstromes S schräg gestellt. Sie sind gegenüber einem senkrecht zur Längsrichtung L ausgebildeten Querschnitt des Rotorblattabschnitts 1 schräg gestellt. Sie laufen in dieser Ausführungsform paarweise zur Rotorblattnase 7 hin aufeinander zu. Die im Verhältnis zur Rotorblattnase 7 schräge Ausrichtung der Vortexgeneratoren 6 bestimmt die Richtung des stromabwärts des Luftstromes S vom Vortexgenerator 6 abgehenden Wirbels mit.

Fig. 2 zeigt zwei integral auf einer Grundplatte 20 ausgeformte Vortexgeneratoren 6, die zu einer in Luftstromrichtung S vorlaufenden, der Rotorblattnase 7 zugewandten Vorderkante 21 der Grundplatte 20 paarweise in einem Winkel β von etwa 30 ° aufeinander zulaufen. Eine gerade und schräg zur Vorderkante 21 abfalllende Oberseite 63 der Vortexgeneratoren 6 bildet einen Winkel α von etwa 15 ° mit der ebenen Grundplatte 20 aus.

Die Größe des von der senkrechten Hinterkante 62 abgehenden Wirbels hängt stark von einer Bauhöhe h des Vortexgenerators 6 ab. Eine Breite b und eine Länge l des Vortexgenerators 6 spielen für die Größe des abgehenden Wirbels eine demgegenüber eher untergeordnete Rolle.

Die Vortexgeneratoren 6 sind positionsfest auf der Grundplatte 20 angeordnet. Die beiden Vortexgeneratoren 6 und die Grundplatte 20 gemäß Fig. 2 sind als einteiliges Bauteil, vorzugsweise in einem Spritzgussverfahren hergestellt. Als Kunststoff zur Herstellung der Grundplatte 20 einschließlich der beiden Vortexgeneratoren 6 wird hier der Kunststoff Luran® verwendet. Der Kunststoff Luran® wird von der Firma BASF vertrieben. Bei Luran® handelt es sich um ein Styrol/Acrylnitril-Copolymer. Es sind aber durchaus auch andere handelsübliche Kunststoffe zur Herstellung der Grundplatte 20 mit Vortexgeneratoren 6 denkbar und verwendbar.

Da die Grundplatte 20 mit den beiden Vortexgeneratoren 6 gemäß Fig. 2 in einem Spritzgussverfahren hergestellt wurde, sind die Übergänge zwischen einem Fuß 64 des Vortexgenerator 6 und der Grundplatte 20 besonders fest und auch unter Betriebsbelastungen stabil. Ermüdungsbrüche und andere Brüche finden nur sehr selten am Fuß 64 des Vortexgenerators 6 statt.

Die Grundplatte 20 mit Vortexgenaratoren 6 ist in fertigen Rotorblättern in die Rotorblattaußenhaut 4 der Saugseite 3 des Rotorblattes eingefügt. Vorzugsweise wird die Grundplatte 20 in eine Aussparung der Rotorblattaußenhaut 4 eingesetzt und dort eingeklebt und gegebenenfalls überlaminiert. Es ist auch denkbar, die Grundplatte 20 mit der abgeschrägten Vorderkante 21 sowie drei weiteren abgeschrägten Kanten 22, 23, 24, die gemeinsam die Grundplatte umlaufend begrenzen, auf die Rotorblattaußenhaut 4 direkt aufzukleben.

Während des Betriebs einer Windkraftanlage mit in die Rotorblattaußenhaut 4 integrierter Grundplatte 20 und von ihr abstehenden Vortexgeneratoren 6 kann es zu Ermüdungsbrüchen von abstehenden Vortexgeneratorspitzen 65 der Vortexgeneratoren 6 kommen.

Neben Ermüdungsbrüchen der abstehenden Vortexgeneratorspitzen 65 der Vortexgeneratoren 6 können Brüche auch durch Kletterer während Wartungs- und Reparaturarbeiten durch versehentliches Abstützen oder Seilschlag entstehen. In allen Fällen brechen die Vortexgeneratoren 6 jedoch aufgrund der integralen Ausbildung mit der Grundplatte 20 nicht mehr am Fuß 64 von der Grundplatte 20 ab, sondern die Brüche ziehen sich quer durch den Vortexgenerator 6 und die abstehende Vortexgeneratorspitze 65 bricht ab.

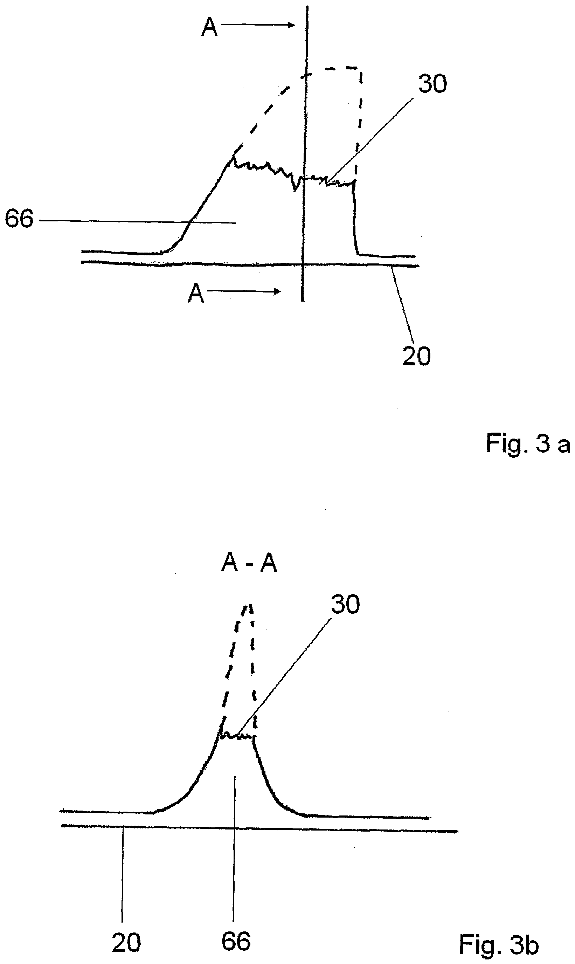

Fign. 3a und 3b zeigen ein typisches Schadensbild eines abgebrochenen Vortexgenerators 6 in einer schematischen Darstellung, nämlich in Fig. 3a in einer Seitenansicht und in der Fig. 3b in einer Frontalansicht.

Fig. 3a zeigt, dass die abstehende Vortexgeneratorspitze 65 eines der Vortexgeneratoren 6 in Fig. 2 entlang einer Abbruchkante 30 abgebrochen ist. Fig. 3b zeigt die Abbruchkante 30 in einer Frontalansicht. Deutlich zu sehen ist, dass sich ein Vortexgeneratorstumpf 66 ausbildet, der die gezackte, sehr ungleich geformte Abbruchkante 30 aufweist.

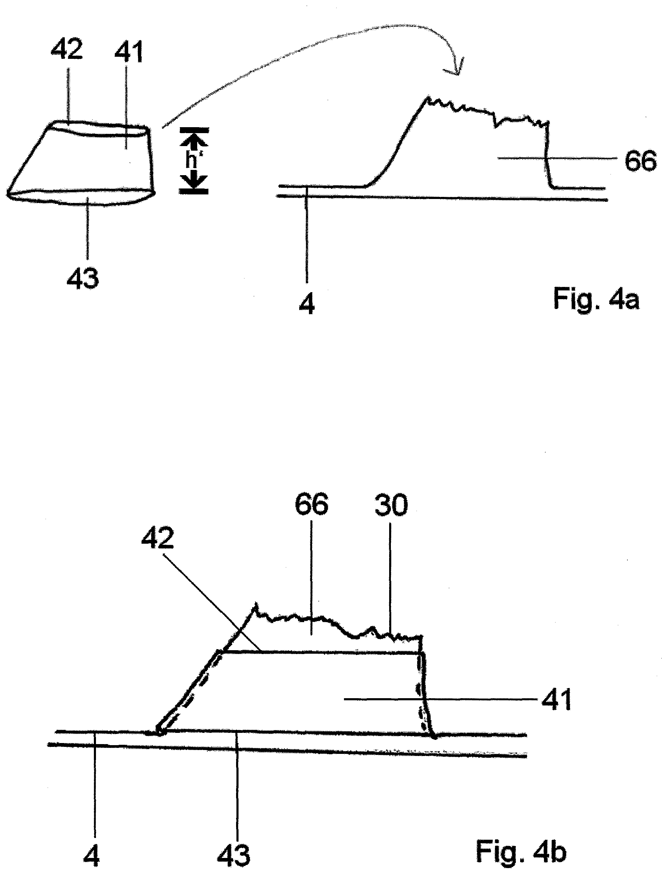

Die Fign. 4a bis 4d zeigen in schematischer Ansicht Verfahrensschritte eines erfindungsgemäßen Reparaturverfahrens, die es ermöglichen, den Vortexgenerator 6 gemäß Fig. 1 und Fig. 2 kosten- und zeitsparend und nach der Reparatur unter Beibehaltung seiner ursprünglichen Wirksamkeit zu reparieren. D. h. dass die aerodynamischen Eigenschaften des Vortexgenerators 6 nach der Reparatur ähnlich sind, vorzugsweise genauso sind wie die aerodynamischen Eigenschaften des ursprünglichen Vortexgenerators 6. Darüber hinaus ist die Stabilität des reparierten Vortexgenerators 6 ähnlich, vorzugsweise genauso wie die Stabilität des ursprünglichen Vortexgenerators 6.

Da die Vortexgeneratoren 6 gemäß Fig. 2 die Abbruchkante 30 aufweisen, die den Vortexgeneratorstumpf 66 erzeugt, ist es möglich, den Vortexgeneratorstumpf 66 abzuschleifen und einen abgeschliffenen Vortexgeneratorstumpf 66a als Halteeinrichtung für eine erfindungsgemäße Vortexgeneratorkrone 50 zu verwenden. Um eine dauerhafte und stabile Verbindung zwischen Vortexgeneratorstumpf 66 und der Vortexgeneratorkrone 50 herstellen zu können, ist es zweckmäßig und erfindungsgemäß vorgesehen, den Vortexgeneratorstumpf 66 auf eine standardisierte Größe zu schleifen. Dazu wird gemäß Fig. 4a eine Schablone 41 zur Verfügung gestellt, die Innenabmessungen aufweist, die Außenabmessungen des zu reparierenden Vortexgenerators 6 entsprechen. Die Schablone 41 ähnelt einem kurzen, sich verjüngenden Schlauchabschnitt mit einer kleinen und einer großen Öffnung 42, 43. Die Schablone wird mit ihrer größere Öffnung 43 vorlaufend von oben auf den Vortexgeneratorstumpf 66 aufgesetzt, bis die größere Öffnung 43 der Schablone 41 auf der Rotorblattaußenhaut 4 aufliegt. Diese Darstellung ist in Fig. 4b gezeigt.

Die Schablone 41 ist in ihrer Höhe h' so dimensioniert, dass ihre rotorblattabseitige kleinere Öffnung 42 rotorblattseitig der Abbruchkante 30 angeordnet ist, wenn die Schablone 41 vollständig und fest auf den Vortexgeneratorstumpf 66 aufgezogen und aufgedrückt ist. Damit ist die Abbruchkante 30 vollständig außerhalb der aufgesetzten Schablone 41 angeordnet. Die aus der Schablone 41 herausstehenden Teile des Vortegeneratorstumpfes 66 werden mit einer (nicht dargestellten) Feile oder mit einem (nicht dargestellten) Schleifgerät abgeschliffen. Dazu ist der umlaufende Rand der kleineren Öffnung 42 der Schablone 41 in besonderer Weise reibfest und abriebfest ausgebildet.

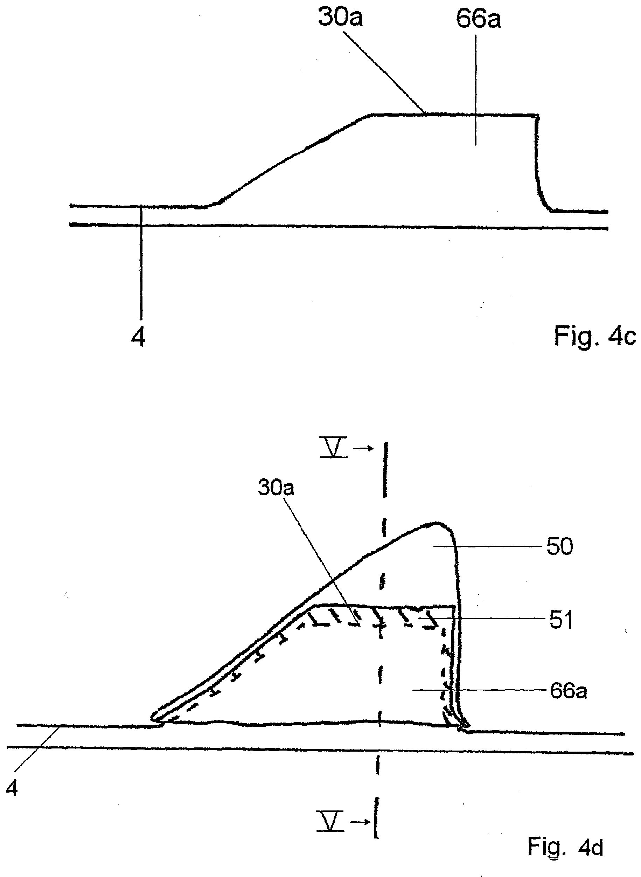

Nachdem der Schleifvorgang durchgeführt ist, kann die Schablone 41 abgenommen werden, und es bleibt ein standardisierter abgeschliffener Vortexgeneratorstumpf 66a gemäß Fig. 4c auf der Rotorblattaußenhaut 4 übrig. Auf diesen standardisierten und abgeschliffenen Vortexgeneratorstumpf 66a kann die ebenfalls auf diesen Vortexgeneratortyp angepasste und standardisierte Vortexgeneratorkrone 50 aufgeklebt werden. Zwischen einer Innenwandung der Vortexgeneratorkrone 50 und der Außenwandung des abgeschliffenen Vortexgeneratorstumpfes 66a ist ein Klebstoff 51 vollflächig vorgesehen.

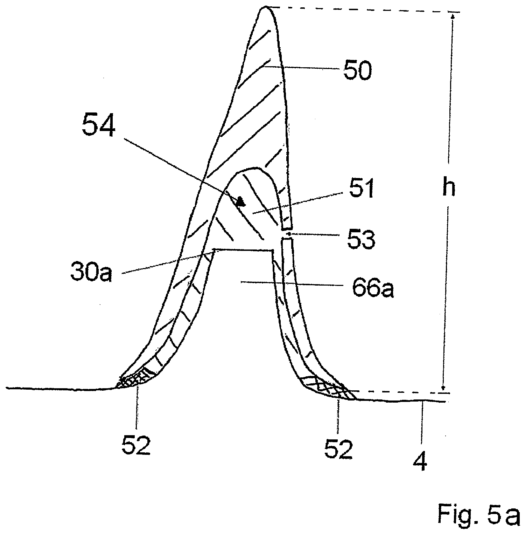

Fig. 5a zeigt eine Ansicht entlang der Linie V-V in Fig. 4d. Der nach dem Schleifvorgang weiterhin integral mit der Grundplatte 20 ausgeformte abgeschliffene Vortexgeneratorstumpf 66a weist eine ebene und glatte abgeschliffene Abbruchkante 30a auf. Eine Höhe des abgeschliffenen Vortexgeneratorstumpfes 66a entspricht der Höhe h' der Schablone 41 und ist damit standardisiert. Standardisieren bedeutet hier, dass bei Vortexgeneratoren 6 eines bestimmten Typs jeweils die gleiche, in der Größe normierte Schablone 41 verwendet werden kann, die auf den Vortexgeneratorstumpf 66 aufgesetzt wird und in allen Fällen einer abgebrochenen abstehenden Vortexgeneratorspitze 65 nach dem Abschleifen einen in den Außenabmessungen identischen abgeschliffenen Vortexgeneratorstumpf 66a hinterlässt. Auf diesen nun standardisierten und abgeschliffenen Vortexgeneratorstumpf 66a kann die standardisierte Vortexgeneratorkrone 50 mit einer dem abgeschliffenen Vortexgeneratorstumpf 66a angepassten standardisierten Aufnahme 54 aufgesetzt werden. Die Aufnahme 54 ist ein Hohlraum, der etwas größer ist als die Außenabmessungen des abgeschliffenen Vortexgeneratorstumpfes 66a, damit die Vortexgeneratorkrone 50 mittels des flüssigen Klebstoffs 51 vollflächig auf den abgeschliffenen Vortexgeneratorstumpf 66a aufgeklebt werden kann. In der Ausführungsform gemäß Fig. 5a ist an einem Außenrand der Aufnahme 54 ein umlaufendes Klebeband 52 vorgesehen, das beim Aufsetzen der Vortexgeneratorkrone 50 auf den abgeschliffenen Vortexgeneratorstumpf 66a eine sofortige Klebverbindung zur Rotorblattaußenhaut 4 herstellt. Vorab wurde in die Aufnahme 54 der Vortexgeneratorkrone der flüssige Klebstoff 51 eingefüllt. Die Vortexgeneratorkrone 50 weist ein Stück weit oberhalb der Höhe des abgeschliffenen Vortexgeneratorstumpfes 66a ein Entlüftungsloch 53 auf. Durch das Entlüftungsloch 53 können Luft und überschüssiger Klebstoff 51 beim Aufsetzen der Vortexgeneratorkrone 50 auf den abgeschliffenen Vortexgeneratorstumpf 66a entweichen, und somit kann die Vortexgeneratorkrone 50 in ihrer idealen Position auf dem abgeschliffenen Vortexgeneratorstumpf 66a positioniert werden und nach Abbinden des flüssigen Klebstoffes 51 eine feste Klebverbindung mit dem abgeschliffenen Vortexgeneratorstumpf 66a herstellen. Die Höhe h der Vortexgeneratorkrone 50 oberhalb der Rotorblattaußenhaut 4 entspricht der Höhe h des ursprünglichen Vortexgenerators 6. Zwar ist die Vortexgeneratorkrone 50 in demselben Abstand oberhalb der Rotorblattaußenhaut 4 etwas breiter als der ursprüngliche Vortexgenerator 6. Die Breite b des Vortexgenerators 6 hat jedoch deutlich geringere Auswirkungen auf die Größe und Intensität der durch den Vortexgenerator 6 ausgeübten Wirbel. Entsprechendes gilt für eine Länge der Vortexgeneratorkrone 50.

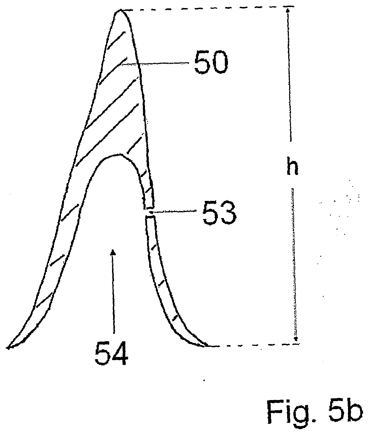

Fig. 5b zeigt die Vortexgeneratorkrone 50 in einer Schnittansicht entsprechend Fig. 5a. Gleiche Bezugszeichen bedeuten auch hier dieselben Bauteile. Die Vortexgeneratorkrone 50 weist die Höhe h auf. Die Vortexgeneratorkrone 50 besteht an ihrer Vortexgeneratorspitze 65 aus einem Vollmaterial, während ein im montierten Zustand dem abgeschliffenen Vortexgeneratorstumpf 66a zugewandter Bereich die Aufnahme 54 aufweist, die im Wesentlichen als Aussparung ausgebildet ist und in ihren Innenabmessungen so bemessen ist, dass sie den mit Hilfe der Schablone 41 abgeschliffenen Vortexgeneratorstumpf 66a vollständig in sich aufnehmen kann und immer noch einen Spalt zwischen einer Innenwandung der Aufnahme 54 und einer Außenwandung des abgeschliffenen Vortexgeneratorstumpfes 66a freilässt, damit in diesen Spalt den abgeschliffenen Vortexgeneratorstumpf seitlich und oben umlaufend Klebstoff 51 eingefüllt werden kann.

### Bezugszeichenliste

- 1: Rotorblattabschnitt
- 2: Druckseite
- 3: Saugseite
- 4: Rotorblattaußenhaut

- 6: Vortexgenerator
- 7: Rotorblattnase
- 8: Rotorblatthinterkante

- 20: Grundplatte
- 21: Vorderkante
- 22: Kante
- 23: Kante
- 24: Kante

- 30: Abbruchkante
- 30a: abgeschliffene Abbruchkante

- 41: Schablone
- 42: rotorblattabseitige kleine Öffnung der Schablone
- 43: rotorblattseitige große Öffnung der Schablone

- 50: Vortexgeneratorkrone
- 51: Klebstoff
- 52: Klebeband
- 53: Entlüftungsloch
- 54: Aufnahme

- 61: zulaufende Spitze des Vortexgenerators
- 62: abfallende Kante / senkrechte Hinterkante
- 63: Oberseite der Vortexgeneratoren
- 64: Vortexgeneratorfuß
- 65: Vortexgeneratorspitze
- 66: Vortexgeneratorstumpf
- 66a: abgeschliffener Vortexgeneratorstumpf

- b: Breite des Vortexgenerators
- h: Bauhöhe des Vortexgenerators
- h': Höhe der Schablone
- l: Länge des Vortexgenerators

- L: Längsrichtung
- R: Rotationsrichtung
- S: Luftstrom

## Patentansprüche

1. Verfahren zur Reparatur eines von einer Rotorblattaußenhaut (4) eines Rotorblattes abstehenden Vortexgenerators (6), dessen Vortexgeneratorspitze (65) abgebrochen ist und einen Vortexgeneratorstumpf (66) auf der Rotorblattaußenhaut (4) hinterlässt, indem
der Vortexgeneratorstumpf (66) abgeschliffen wird und
auf den abgeschliffenen Vortexgeneratorstumpf (66a) eine Vortexgeneratorkrone (50) aufgebracht wird.

2. Verfahren nach Anspruch 1,
**dadurch gekennzeichnet, dass** auf den Vortexgeneratorstumpf (66) eine Schablone (41) gesteckt wird und über die Schablone (41) hinaus abstehende Teile des Vortexgeneratorstumpfes (66) abgeschliffen werden.

3. Verfahren nach Anspruch 2,
**dadurch gekennzeichnet, dass** die Vortexgeneratorkrone (50) mit einer der Schablone (41) angepassten Aufnahme (54) auf den abgeschliffenen Vortexgeneratorstumpf (66a) aufgesetzt wird.

4. Verfahren nach Anspruch 1, 2 oder 3,
**dadurch gekennzeichnet, dass** die Vortexgeneratorkrone (50) auf den abgeschliffenen Vortexgeneratorstumpf (66a) aufgeklebt wird.

5. Verfahren nach einem der vorstehenden Ansprüche,
**dadurch gekennzeichnet, dass** die Vortexgeneratorkrone (50) mittels eines an der Vortexgeneratorkrone (50) angeordneten Klebestreifens (52) auf dem abgeschliffenen Vortexgeneratorstumpf (66a) fixiert wird.

6. Verfahren nach einem der vorstehenden Ansprüche,
**dadurch gekennzeichnet, dass** die Aufnahme (54) mit Klebstoff (51) gefüllt wird, mit dem die Vortexgeneratorkrone (50) dauerhaft auf dem abgeschliffenen Vortexgeneratorstumpf (66a) festgeklebt wird.

7. Reparaturbausatz mit einer Vortexgeneratorkrone (50) und einer Schablone (41), wobei die Vortexgeneratorkrone (50) eine einer Vortexgeneratorspitze (65) angepasste Außenkontur aufweist, und einer Aufnahme (54), die einem abgeschliffenen Vortexgeneratorstumpf (66a) angepasst ist, und wobei die Schablone (41) einen einem abgeschliffenen Vortexgeneratorstumpf (66a) komplementär angepassten hülsenartigen Innenraum aufweist mit einer großen rotorblattseitigen Öffnung (43) und einer kleinen rotorblattabseitigen Öffnung (42), und die Schablone (41) zum Aufsetzen auf den abgebrochenen Vortexgeneratorstumpf (66) bestimmt ist.

8. Reparaturbausatz nach Anspruch 7,
**gekennzeichnet durch** einen Auslass für flüssigen Klebstoff (51) zwischen Aufnahme (54) und Rotorblattaußenhaut (4).

9. Reparaturbausatz nach Anspruch 7 oder 8,
**dadurch gekennzeichnet, dass** die Vortexgeneratorkrone (50) ein die Aufnahmeöffnung vorzugsweise vollständig umlaufendes Klebeband (52) aufweist.

## Claims

1. A method for repairing a vortex generator (6) which projects from an outer skin (4) of a rotor blade, the vortex generator tip (65) of which is broken off and leaves behind a vortex generator stub (66) on the rotor blade outer skin (4),
by
the vortex generator stub (66) being ground down and
a vortex generator crown (50) being fitted onto the ground-down vortex generator stub (66a).

2. The method as claimed in claim 1,
**characterized in that** a template (41) is fitted onto the vortex generator stub (66) and parts of the vortex generator stub (66) which project beyond the template (41) are ground down.

3. The method as claimed in claim 2,
**characterized in that** the vortex generator crown (50) is fitted onto the ground-down vortex generator stub (66a) by a socket (54) which is matched to the template (41).

4. The method as claimed in claim 1, 2 or 3,
**characterized in that** the vortex generator crown (50) is adhesively fastened to the ground-down vortex generator stub (66a).

5. The method as claimed in one of the preceding claims,
**characterized in that** the vortex generator crown (50) is fixed on the ground-down vortex generator stub (66a) by means of an adhesive strip (52) which is arranged on the vortex generator crown (50).

6. The method as claimed in one of the preceding claims,
**characterized in that** the socket (54) is filled with adhesive (51) with which the vortex generator crown (50) is permanently adhesively fixed on the ground-down vortex generator stub (66a).

7. A repair kit with a vortex generator crown (50) and a template (41),
wherein the vortex generator crown (50) has an external contour which is matched to a vortex generator tip (65), and with a socket (54) which is matched to a ground-down vortex generator stub (66a), and wherein the template (41) has a sleeve-like interior space which is complementarily matched to a ground-down vortex generator stub (66a), with a large rotor blade-side opening (43) and a small rotor blade rear-side opening (42), and the template (41) is designed for fitting onto the broken-off vortex generator stub (66).

8. The repair kit as claimed in claim 7,
**characterized by** an outlet for liquid adhesive (51) between socket (54) and rotor blade outer skin (4).

9. The repair kit as claimed in claim 7 or 8,
**characterized in that** the vortex generator crown (50) has an adhesive strip (52) which preferably completely encompasses the socket opening.

## Revendications

1. Procédé pour la réparation d'un générateur de vortex qui fait saillie d'une enveloppe extérieure de pale de rotor (4) d'une pale de rotor dont la pointe de générateur de vortex (65) est cassée et qui laisse un tronçon de générateur de vortex (66) sur l'enveloppe extérieure de pale de rotor (4), le tronçon de générateur de vortex (66) étant meulé et une couronne de générateur de vortex (50) étant montée sur le tronçon de générateur de vortex meulé (66a).

2. Procédé selon la revendication 1, **caractérisé en ce qu'**un gabarit (41) est emboîté sur le tronçon de générateur de vortex (66) et que des parties du tronçon de générateur de vortex (66) qui dépassent du gabarit (41) sont meulées.

3. Procédé selon la revendication 2, **caractérisé en ce que** la couronne de générateur de vortex (50) est montée sur le tronçon de générateur de vortex meulé (66a) avec un logement (54) adapté au gabarit (41).

4. Procédé selon la revendication 1, 2 ou 3, **caractérisé en ce que** la couronne de générateur de vortex (50) est collée sur le tronçon de générateur de vortex meulé (66a).

5. Procédé selon l'une des revendications précédentes, **caractérisé en ce que** la couronne de générateur de vortex (50) est fixée sur le tronçon de générateur de vortex meulé (66a) au moyen d'une bande de colle (52) placée sur la couronne de générateur de vortex (50).

6. Procédé selon l'une des revendications précédentes, **caractérisé en ce que** le logement (54) est rempli de colle (51) avec laquelle la couronne de générateur de vortex (50) est solidement collée de manière permanente sur le tronçon de générateur de vortex meulé (66a).

7. Kit de réparation avec une couronne de générateur de vortex (50) et un gabarit (41), la couronne de générateur de vortex (50) présentant un contour extérieur adapté à une pointe de générateur de vortex (65), et avec un logement (54) qui est adapté à un tronçon de générateur de vortex meulé (66a), et le gabarit (41) présentant un espace intérieur de type manchon, adapté de manière complémentaire à un tronçon de générateur de vortex meulé (66a), avec une grande ouverture du côté de la pale de rotor (43) et une petite ouverture du côté opposé à la pale de rotor (42) et le gabarit (41) étant destiné à être monté sur le tronçon de générateur de vortex cassé (66).

8. Kit de réparation selon la revendication 7, **caractérisé par** une sortie pour de la colle liquide (51) entre le logement (54) et l'enveloppe extérieure de pale de rotor (4).

9. Kit de réparation selon la revendication 7 ou 8, **caractérisé en ce que** la couronne de générateur de vortex (50) présente une bande de colle (52) qui entoure l'ouverture du logement de préférence entièrement.
